# EUROPÄISCHE PATENTSCHRIFT

(11) **EP 2 564 402 B1**
(45) Veröffentlichungstag und Bekanntmachung des Hinweises auf die Patenterteilung: **20.01.2016**
(21) Anmeldenummer: 11718688.2
(22) Anmeldetag: 21.04.2011
(51) Int. Cl.: H01F 27/40, H01F 38/30, H02H 7/04, H02H 9/06

(54) **STROMWANDLERANORDNUNG**
CURRENT TRANSFORMER ARRANGEMENT
ENSEMBLE TRANSFORMATEUR DE COURANT

(30) Priorität: 27.04.2010 DE 102010018969
(43) Veröffentlichungstag der Anmeldung: 06.03.2013
(73) Patentinhaber: Siemens Aktiengesellschaft, 80333 München (DE)
(72) Erfinder: GORABLENKOW, Jörg, 13591 Berlin (DE); GROISS, Andreas, 14612 Falkensee (DE); HILKER, Thomas, 14482 Potsdam (DE); STENZEL, Peter, 14612 Falkensee (DE)
(86) Internationale Anmeldenummer: PCT/EP2011/056410
(87) Internationale Veröffentlichungsnummer: WO 2011/134884

(56) Entgegenhaltungen:
- EP-A1- 0 665 561
- WO-A1-2006/077181
- CH-A5- 675 924
- DE-A1- 4 318 367
- DE-A1- 4 322 944

## Beschreibung

Die Erfindung bezieht sich auf eine Stromwandleranordnung mit einem Primärteil, welcher von einem Gehäuse mit zumindest einem zwischen einem ersten und einem zweiten elektrisch leitfähigen Gehäuseteil angeordneten elektrisch isolierenden Spalt umgeben ist und einen Sekundärteil durchsetzt.

Eine derartige Stromwandleranordnung ist beispielsweise aus der Offenlegungsschrift DE 10 2005 003 870 A1 bekannt. Die dortige Stromwandleranordnung weist einen Primärteil auf, welcher von einem elektrisch leitfähigen Gehäuse umgeben ist. Das elektrisch leitfähige Gehäuse seinerseits ist von einem Sekundärteil umgeben, so dass der Primärteil auch den Sekundärteil durchsetzt. Das elektrisch leitfähige Gehäuse ist mit einem elektrisch isolierenden Spalt ausgestattet. Ein elektrisch isolierender Spalt begrenzt eine Ausbreitung von parasitären Strömen im Gehäuse, welche Messergebnisse der Stromwandleranordnung beeinflussen könnten.

Stromwandleranordnungen werden vorzugsweise eingesetzt, um Ströme erfassen zu können, welche in Hochspannungsanlagen fließen. An derartigen Anlagen ist vorgesehen, dass elektrisch leitfähige Teile, welche nicht einer Stromführung als Phasenleiter dienen, mit Erdpotential zu beaufschlagen sind. So sind beispielsweise sämtliche elektrisch leitfähigen Gehäuse, Tragelemente, Absperrgitter usw. mit Erdpotential zu beaufschlagen. So wird verhindert, dass unerwünschte elektrische Aufladungen entstehen, welche bei einem Berühren, beispielsweise durch Bedienpersonal, zu einer das Bedienpersonal gefährdenden elektrischen Durchströmung führen können.

Ist bei einer Stromwandleranordnung ein elektrisch isolierender Spalt vorgesehen, um zwei Gehäuseteile des elektrisch leitfähigen Gehäuses voneinander elektrisch zu isolieren, so kann eine Erdung beider Gehäuseteile nicht ohne weiteres erfolgen. Würde man die beiden Gehäuseteile aus Sicherheitsgründen derart erden, dass der Sekundärteil von dem Erdungspfad durchsetzt ist, wäre der Spalt kurzgeschlossen und die elektrisch isolierende Wirkung des Spaltes hinfällig. Somit kann eine Erdung aller Gehäuseteile aus Gründen der Betriebssicherheit nur außerhalb des Sekundärteils erfolgen. Es ist jedoch auch im Innern des Sekundärteils die Betriebssicherheit zu gewährleisten.

Aus der Offenlegungsschrift DE 43 18 367 A1 ist eine metallgekapselte Hochspannungsschaltanlage bekannt, die einen Stromwandler aufweist. Um elektromagnetische Störimpulse von den Sekundärwicklungen des Stromwandlers fernzuhalten, sind ein erster sowie ein zweiter Abschirmkörper vorgesehen, welche einander überlappen und zwischen denen eine Isolierschicht angeordnet ist.

Aus der Offenlegungsschrift DE 43 22 944 A1 geht ein Stromwandler einer mit Schutzgas gefüllten Schaltanlage hervor. Der dortige Stromwandler weist ein Kapselungsteil sowie einen Träger auf, die benachbart zueinander angeordnet sind, wobei diese mittels einer Gießharzschicht gegeneinander isoliert sind. Durch eine spezielle Formgebung von Kapselungsteil und Träger kann ein Kondensator ausgebildet werden.

Aus der europäischen Patentanmeldung EP 0 665 561 A1 ist ein Ringkernstromwandler zum Einbau in eine metallgekapselte Hochspannungsschaltanlage bekannt. Dort ist ein Gehäuse vorgesehen, welches eine innere sowie eine äußere Kapselung aufweist, wobei die innere sowie die äußere Kapselung mittels einer Dichtung voneinander elektrisch isoliert sind, so dass ein elektrisch isolierender Spalt gebildet ist. Auf der inneren Kapselung ist eine Isolationsschicht eines Kondensators angeordnet, so dass eine Schutzbeschaltung auf der inneren Kapselung aufliegt.

Daher ist es Aufgabe der Erfindung eine Stromwandleranordnung anzugeben, welche bei einem wirksamen elektrisch isolierenden Spalt eine verbesserte Betriebssicherheit bei einem vereinfachten Aufbau aufweist.

Erfindungsgemäß wird die Aufgabe an einer Stromwandleranordnung der eingangs genannten Art dadurch gelöst, dass der Spalt von einer Überspannungsschutzanordnung überbrückt ist und die Überspannungsschutzanordnung nach Art einer Brücke von dem einen Gehäuseteil zu dem anderen Gehäuseteil ausgebildet ist, wobei die Überspannungsschutzanordnung den Spalt elektrisch parallel überbrückt.

Die elektrisch leitfähigen Gehäuseteile sind beispielsweise Teil eines Gehäuses, welches den Primärteil umgibt. Der Primärteil ist beispielsweise ein elektrischer Phasenleiter, durch welchen ein elektrischer Strom getrieben von einer Spannung fließt. Der Phasenleiter ist dabei elektrisch isoliert gegenüber Erdpotential zu halten und zu positionieren. Der Primärteil ist somit auch elektrisch isoliert gegenüber den Gehäuseteilen zu halten. Das Gehäuse weist zumindest auf einer Seite des Spaltes, d. h., an einem der Gehäuseteile Erdpotential auf. Um eine elektrische Isolation des Phasenleiters gegenüber diesem Erdpotential zu bewirken, ist der Bereich um den Primärteil herum mit einem elektrisch isoliekann beispielsweise unter erhöhtem Druck stehendes Gas sein. Geeignet sind beispielsweise Schwefelhexafluorid, Stickstoff oder Gemische mit diesen Gasen. Das Gehäuse kann Teil einer Kapselung sein, welche das Fluid in sich aufnimmt und begrenzt. Insbesondere bei einem erhöhten Innendruck ist das Gehäuse entsprechend druckfest und fluiddicht zu gestalten. Der Übergang von den elektrisch leitfähigen Teilen des Gehäuses zu dem elektrisch isolierenden Spalt und der elektrisch isolierende Spalt selbst müssen den Anforderungen an einen Druckbehälter entsprechen. Das Gehäuse nebst Spalt ist dabei fluiddicht und druckfest ausgestaltet. Entsprechend sind Verbindungselemente des Gehäuses fluiddicht auszuführen. Vorteilhaft ist dabei, wenn das Gehäuse im Wesentlichen rohrförmig ausgestaltet ist, wobei endseitig als Verbindungselemente jeweils Flansche angeordnet sind, um das Gehäuse über die Flansche mit weiteren Baugruppen der Kapselung zu verbinden. Als Flansche eignen sich beispielsweise Blattflansche, wobei auf eine Flanschfläche ein Dichtelement, beispielsweise ein elastisch verformbarer O-Ring auflegbar ist. Der O-Ring kann dabei in einer Ausnehmung eingequetscht werden und dabei seine Dichtwirkung an einem Verbindungselement des Gehäuses entfalten.

Der im Innern der Stromwandleranordnung angeordnete Primärteil in Form eines Phasenleiters ist von dem Gehäuse umgeben. Außerhalb des Gehäuses ist der Sekundärteil der Stromwandleranordnung angeordnet. Der Sekundärteil ist beispielsweise eine Wicklung, welche eine von einem Stromfluss ausgehende Größe, beispielsweise ein Magnetfeld berührungslos erfasst und ein proportionales Abbild dieser Größe erstellt. Über die vom Sekundärteil gewandelten Informationen des Stromes kann auf einen Stromfluss in dem Primärteil rückgeschlossen werden. Damit ist es möglich, einen Stromfluss in dem Phasenleiter berührungslos zu erfassen und somit Informationen über den Zustand des Phasenleiters zu gewinnen.

Eine Anordnung des Phasenleiters innerhalb einer Kapselung aus elektrisch leitfähigem Material kann zu einem Entstehen von Strömen innerhalb des Gehäuses führen. Ein Strom im Gehäuse wird beispielsweise durch einen im Primärteil fließenden Strom induziert. Neben diesem Strom können auch weitere Komponenten einen Stromfluss im Gehäuse hervorrufen. Bei einer Summierung der im Primärteil und im Gehäuseteil fließenden Ströme kompensieren sich diese nahezu vollständig. Damit ist eine berührungslose Messung des Stromes im Primärteil außerhalb des Gehäuses mit einem großen Fehler behaftet bzw. kaum möglich. Durch die Einbringung eines elektrisch isolierenden Spaltes wird ein Stromfluss im Gehäuse im Bereich der Stromwandleranordnung unterbrochen, so dass keine Kompensation der Magnetfelder des im Primärteil fließenden Stromes und des durch die Gehäuseteile gegebenenfalls fließenden Stromes mehr möglich ist. Somit kann der Sekundärteil den im Primärteil fließenden Strom erfassen. Der Spalt kann verschiedenartig ausgeführt werden. Der Spalt kann beispielsweise von einem gasförmigen oder flüssigen Isoliermedium durchströmt sein. Es kann jedoch auch eine Feststoffisolation zur Ausbildung des Spaltes vorgesehen sein. Mittels Feststoffisolation ist es möglich, die beiden Gehäuseteile zu verbinden und über den Spalt auch mechanische Kräfte zwischen den beiden Gehäuseteilen des Gehäuses zu übertragen.

Der elektrisch isolierende Spalt sollte vorzugsweise vom Sekundärteil azimutal umgriffen sein, d. h., ausgehend von dem Primärteil sollte der auf einer azimutalen Bahn in sich geschlossen umlaufende elektrisch isolierende Spalt von dem Sekundärteil überdeckt werden. Eine unterbrechende Wirkung des Spaltes für parasitäre Ströme, wie Rückströme und Wirbelströme, erfolgt in unmittelbarer Nähe zu dem Sekundärteil. Der Sekundärteil bleibt durch parasitäre Ströme verursachte Störungen nahezu unbeeinflusst, so dass eine genaue Messung des im Primärteil fließenden Stromes ermöglicht ist.

Als Sekundärteil können verschiedenste Konstruktionen zum Einsatz gelangen. So kann beispielsweise vorgesehen sein, dass eine Stromwandleranordnung nach einem transformatorischen Prinzip arbeitet. Der als Primärteil fungierende Phasenleiter wirkt als Primärwicklung eines Transformators und der Sekundärteil weist eine Sekundärwicklung auf, wobei in der Sekundärwicklung eine entsprechende Spannung induziert wird, die einen Strom treiben kann. Über das Übersetzungsverhältnis und die am Sekundärteil messbaren elektrischen Größen wie Strom, Spannung, Phasenlage, kann der Strom im Primärteil der Stromwandleranordnung abgebildet werden.

Es können jedoch auch alternative Ausgestaltungen des Sekundärteils vorgesehen sein. Beispielsweise können Halbleiterbaugruppen wie Hall-Sensoren zum Einsatz kommen, um ein Feld des Stromes des Primärteiles zu erfassen. Es können jedoch auch faseroptische Wicklungen zum Einsatz gelangen.

In eine faseroptische Wicklung, welche eine Wicklung des Sekundärteiles darstellt, wird ein polarisiertes Licht mit einer bestimmten Lage seiner Polarisationsebene eingeleitet. Durch von dem im Primärteil fließenden Strom ausgehende magnetische Felder kann die Lage der Polarisationsebene verändert werden. Die Änderung der Lage der Polarisationsebene ist ein Maß für den im Primärteil fließenden elektrischen Strom. Somit kann ein Rückschluss auf den im Primärteil fließenden Strom erfolgen.

Der elektrisch isolierende Spalt ist eine Voraussetzung, um außerhalb des Gehäuse ein im Primärteil fließenden Strom vereinfacht erfassen bzw. abbilden zu können und dabei eine Verfälschung des Messergebnisses durch gegebenenfalls in dem Gehäuse fließenden Rückströme, Wirbelströme oder ähnliche parasitäre Ströme zu vermeiden.

Es kann vorgesehen sein, die beiden Gehäuseteile elektrisch leitend miteinander zu verbinden. Eine niederohmige Verbindung sollte den Spalt kurzschließen, wobei die Verbindung jedoch außerhalb des Erfassungsbereiches des Sekundärteils verlaufen sollte. So können beispielsweise ein oder mehrere Leiterbügel/Leiterbänder am äußeren Umfang des Sekundärteils, dasselbe überspannend, angeordnet sein. Dieser niederohmige Strompfad ist elektrisch parallel zu der Überspannungsschutzanordnung verschaltet, wobei die Überspannungsschutzanordnung innerhalb des Erfassungsbereiches des Sekundärteils zwischen Primär- und Sekundärteil befindlich ist und der niederohmige Strompfad außerhalb des Erfassungsbereiches des Sekundärteils verläuft. Damit sind die beiden Gehäuseteile in Bereichen, welche nicht von dem Sekundärteil abgedeckt sind, elektrisch leitend verbunden und in der Lage, das gleiche elektrische Potential zu führen. Die in den Erfassungsbereich des Sekundärteils ragenden Enden der Gehäuseteile, d. h., die Enden, welche den elektrisch isolierenden Spalt aufweisen, sind jedoch in der Lage, unterschiedliche Potentiale zu führen. Insbesondere hochfrequente Erscheinungen können die Wirksamkeit des außerhalb des Sekundärteils liegenden niederohmigen Strompfades herabsetzen und zu Potentialdifferenzen am elektrisch isolierenden Spalt führen.

Durch das Anordnen einer Überspannungsschutzanordnung über dem Spalt ist es möglich, die beiden Gehäuseteile voneinander elektrisch isoliert zu beabstanden und im Falle einer Potentialdifferenz zwischen den beiden Gehäuseteilen des Gehäuses einen Abbau dieser Potentialdifferenz herbeizuführen. Eines der Gehäuseteile kann dazu beispielsweise mit Erdpotential beaufschlagt sein.

Eine elektrisch leitende Verbindung beider Gehäuseteile innerhalb des Sekundärteils würde zu einer Wirkungslosigkeit des elektrisch isolierenden Spaltes bezüglich einer Funktion des Sekundärteils führen. Die Gehäuseteile sind über den Spalt voneinander elektrisch isoliert. Der Spalt kann zur elektrisch isolierten Abstützung eines der Gehäuseteile genutzt werden. Dazu kann der elektrisch isolierende Spalt durch elektrisch isolierendes winkelsteifes Material ausgebildet sein, wobei die beiden Gehäuseteile winkelsteif mit dem elektrisch isolierenden Material verbunden sind. Das elektrisch isolierende Material kann beispielsweise ringförmiges Isolierharz, eine ringförmige Keramik usw. sein.

Zum einen wird durch eine Überspannungsschutzanordnung an dem Spalt das Entstehen von Überspannungen verhindert und dadurch werden Personen vor dem Einwirken von Überspannungen und einer daraus folgenden elektrischen Durchströmung geschützt. Zum anderen wird auch die Stromwandleranordnung selbst vor einem Auftreten von Belastungen durch Überspannungen geschützt. Derartige Überspannungen können beispielsweise auch im Sekundärteil zu Beschädigungen führen. Weiterhin kann durch Überspannungen auch eine starke Beanspruchung des am Spalt verwendeten elektrisch isolierenden Materials erfolgen, so dass das Material in seiner Struktur geschädigt wird. Dies kann dazu führen, dass eine Fluiddichtigkeit dieses Spaltes bzw. der Verbindung des den Spalt ausbildenden Materials zu den Gehäuseteilen zumindest teilweise zerstört wird und damit eine Fluiddichtigkeit des Gehäuses nicht mehr gegeben ist. Die Überspannungsschutzanordnung ist in einem einfachen Falle nach Art einer Brücke von dem einen Gehäuseteil zu dem anderen Gehäuseteil ausgebildet. Über diese Brücke kann dann bedarfsweise ein Ableitstrompfad gegen Endpotential ausgebildet werden. Im durchgeschalteten, d. h., aktiven Zustand des Ableitstrompfades weist dieser eine im Vergleich zur Impedanz des Spaltes reduzierte Impedanz auf. Über den zeitweise durchgeschalteten Ableitstrompfad kann ein Entladestrom geleitet werden, welcher eine Potentialdifferenz zwischen den Gehäuseteilen abbaut. Nach einem Abbau der Überspannung erfolgt dann wiederum eine Erhöhung der Impedanz des Ableitstrompfades der Überspannungsschutzanordnung zwischen den voneinander beabstandet gehaltenen Gehäuseteilen.

Somit wird für eine kurze Zeit der elektrisch isolierende Spalt im Innern des Sekundärteils kurzgeschlossen, so dass während dieser Zeit die elektrisch isolierende Wirkung des Spaltes durch den Ableitstrompfad der Überspannungsschutzanordnung aufgehoben ist.

Die Überspannungsschutzanordnung stellt einen schaltbaren Ableitstrompfad dar, welcher bedarfsweise den elektrisch isolierenden Spalt überbrückt, wobei dieser Ableitstrompfad während einer Überbrückung eine geringere Impedanz aufweist, als der elektrisch parallele elektrisch isolierende Spalt.

Dabei kann vorteilhaft vorgesehen sein, dass die Überspannungsschutzanordnung ein frequenzabhängiges Impedanzelement aufweist.

Ein frequenzabhängiges Impedanzelement ermöglicht eine Durchschaltung des Ableitstrompfads in Abhängigkeit der Frequenz einer über dem Spalt auftretenden Überspannung zu steuern. Dabei hat sich als vorteilhaft erwiesen, das frequenzabhängige Impedanzelement nach Art eines Hochpasses auszubilden. Bei hochfrequenten Überspannungen erfolgt eine Ausbildung eines Ableitstrompfades, d. h., der elektrisch isolierende Spalt wird von der Überspannungsschutzanordnung überbrückt. Eine hochfrequente Überspannung wird über die Überspannungsschutzanordnung gegen Erde kurzgeschlossen, so dass sich die Überspannung reduziert. Nach einem erfolgten Überspannungsabbau ist die Wirksamkeit des elektrisch isolierenden Spaltes wieder gegeben. Der Ableitstrompfad der Überspannungsschutzanordnung zwischen den Gehäuseteilen ist dann wieder mit einer gegen möglichst unendlich tendierenden Impedanz ausgestattet. Das Ansprechverhalten des Hochpass kann variabel einstellbar sein. Damit kann sichergestellt werden, dass bei einem regulären niederfrequenten Betrieb von ca. 50 oder 60 Hz der Stromwandleranordnung die Überspannungsschutzanordnung nicht anspricht.

Eine weitere vorteilhafte Ausgestaltung kann vorsehen, dass das Impedanzelement einen Kondensator aufweist.

Mittels eines Kondensators ist es in einfacher Weise möglich, einen Hochpass über dem elektrisch isolierenden Spalt auszubilden und so hochfrequente Überspannungen abzubauen. Der Kondensator schließt dabei in Abhängigkeit der Frequenz der über dem elektrisch isolierenden Spalt anliegenden Spannung den elektrisch isolierenden Spalt kurz und lässt von hochfrequenten Spannungen getriebene Ströme passieren, wobei aufgrund dieses Stromflusses die hochfrequenten Spannungen gegen Erdpotential entladen werden.

Es kann vorgesehen sein, dass zur Erhöhung der elektrischen Belastbarkeit mehrere Kondensatoren parallel geschaltet sind und diese parallel geschalteten Kondensatoren den elektrisch isolierenden Spalt gemeinsam überbrücken.

Vorteilhaft kann dazu vorgesehen sein, dass der Kondensator als Plattenkondensator ausgeführt ist.

Ein Plattenkondensator weist eine kostengünstig herzustellende Struktur auf, wobei ein Plattenkondensator bei einer relativ großen Fläche eine vergleichsweise geringe Bauhöhe aufweist. Insbesondere bei der Anordnung einer Vielzahl von Kondensatoren längs des Spaltes ist so ein Aufbringen einer hohen Kapazität möglich, wobei die radiale Ausdehnung der Gesamtanordnung in einem nur geringen Maße vergrößert wird.

Vorteilhafterweise kann vorgesehen sein, dass mehrere Plattenkondensatoren im Verlauf des Spaltes diesen überbrückend parallel angeordnet sind.

Mehrere Plattenkondensatoren im Verlauf des Spaltes ermöglichen es, die Plattenkondensatoren in ihrer Formgebung dem Spaltverlauf angepasst auszubilden. So ist es beispielsweise möglich, die Plattenkondensatoren schalenförmig zu gestalten, so dass sie beispielsweise bei einer rohrförmigen Struktur des Gehäuses mantelseitig an diesem angeordnet und aufgesetzt werden. Der Umfang des Gehäuses wird dabei nur in einem geringeren Maße vergrößert. So kann beispielsweise vorgesehen sein, dass mehrere gewölbte Plattenkondensatoren am Umfang des Gehäuses verteilt angeordnet sind.

Eine weitere vorteilhafte Ausgestaltung kann vorsehen, dass die Überspannungsschutzanordnung ein spannungsabhängiges Impedanzelement aufweist.

Neben einem frequenzabhängigen Schalten eines Ableitstrompfades durch die Überspannungsschutzanordnung kann alternativ oder ergänzend vorgesehen sein, dass das Impedanzelement diesen Ableitstrompfad auch spannungsabhängig steuert. Unabhängig von der Frequenz einer Überspannung, lediglich durch den Betrag der über dem Spalt anstehenden Potentialdifferenz, kann diese Überspannung durch die Überspannungsschutzanordnung durch Ausbildung eines den elektrisch isolierenden Spalt brückenden Ableitstrompfades abgebaut werden.

Damit ist es möglich, unabhängig von der Art der Spannung beispielsweise auch Gleichspannungen abzubauen. Es kann auch vorgesehen sein, dass an der Überspannungsschutzanordnung verschiedene Stufen des Auslösens vorgesehen sind. Diese verschiedenen Stufen können gegebenenfalls auch nach verschiedenen Kriterien wie beispielsweise einer Frequenz oder einer Potentialdifferenz ansprechen.

Eine vorteilhafte Ausgestaltung kann vorsehen, dass das Impedanzelement eine Pegelfunkenstrecke aufweist.

Eine Pegelfunkenstrecke stellt eine konstruktiv einfache Ausgestaltung eines Impedanzelementes einer Überspannungsschutzanordnung dar. Mittels Beabstandung entsprechender Elektroden ist es möglich, einen Schutzpegel einer Funkenstrecke einzustellen. Durch eine Variation der Beabstandung und/oder Form der Elektroden voneinander, ist das Ansprechverhalten der Überspannungsschutzanordnung einstellbar. Eine Pegelfunkenstrecke kann auch ergänzend zu weiteren Impedanzelementen wie beispielsweise Kondensatoren oder anderen möglichen Impedanzelementen eingesetzt werden, so dass die Pegelfunkenstrecke auch eine Schutzwirkung für die anderen Impedanzelemente ausübt. Damit ist es möglich, beispielsweise bei sehr großen Überspannungen diese zunächst über die Pegelfunkenstrecke reduzieren zu lassen und eine verbleibende Überspannung über weitere Impedanzelemente abzubauen.

Weiter kann vorteilhaft vorgesehen sein, dass das Impedanzelement einen Varistor aufweist.

Varistoren sind Bauelemente, welche in Abhängigkeit der über dem Varistor anliegenden Spannung ihre Impedanz ändern. Varistoren sind beispielsweise Halbleiterbauelemente, welche auf Metalloxidbasis strukturiert sind. Über die Wahl und die Formgebung des Metalloxides ist es möglich, das Ansprechverhalten des Varistors einzustellen.

Dabei ist es eine Eigenart von Varistoren, dass eine Reduzierung der Impedanz des Varistors nur so lange anhält, wie die anliegende Spannung eine bestimmte Ansprechspannung übersteigt. Nach einem Unterschreiten der Ansprechspannung nimmt der Varistor ein hochimpedantes Verhalten an, d. h., dessen elektrische Impedanz sollte vorzugsweise gegen unendlich tendieren. Dabei ist darauf zu achten, dass die an dem Varistor anliegenden Spannungen eine bestimmte Durchbruchspannung nicht überschreiten, da ein derartiges Überschreiten zu einer Zerstörung des Varistors führen würde.

Ebenso wie bei einem Verwenden von mehreren elektrisch parallel zueinander geschalteten Kondensatoren können auch mehrere Varistoren den elektrisch isolierenden Spalt parallel überbrücken. Dadurch ist es möglich, im Falle einer Überspannung einen Ableitstrom auf mehrere Parallelstrompfade mehrerer Varistoren zu verteilen. Damit ist eine günstigere Verteilung mehrerer Varistoren, die entsprechend kleinbauend sind, am Umfang des Gehäuses ermöglicht.

Weiterhin kann vorteilhaft vorgesehen sein, dass der Spalt sich in radialer Richtung zwischen Primärteil und Sekundärteil erstreckt.

Vorteilhafterweise sollte die Stromwandleranordnung annähernd rotationssymmetrisch ausgestaltet sein, wobei ausgehend von dem Primärteil sich die weiteren Bauteile in radialer Richtung nach außen aufeinander folgend erstrecken. Der Primärteil selbst ist von einem elektrisch isolierenden Medium umgeben. Das elektrisch isolierende Medium ist von dem Gehäuse begrenzt. Das Gehäuse wiederum ist von dem Sekundärteil der Stromwandleranordnung umgeben. Der Spalt sollte dabei in azimutaler Richtung in sich geschlossen um den Primärteil umlaufen, so dass die beiden Gehäuseteile über den elektrisch isolierenden Spalt voneinander elektrisch isoliert und gegebenenfalls miteinander mechanisch verbunden sind. Durch die Anordnung des Spaltes zwischen Primär- und Sekundärteil ist es möglich, den Erfassungsbereich des Sekundärteiles möglichst frei von Störgrößen im Gehäuse wie Rückströmen oder Wirbelströmen zu halten. Bei einer Erfassung des Stromes im Primärteil in unmittelbarer Nähe des Spaltes ist es möglich, den Spalt relativ schmal zu halten.

Im Folgenden wird ein Ausführungsbeispiel der Erfindung schematisch in einer Zeichnung gezeigt und nachfolgend näher beschrieben. Dabei zeigt die
- Figur 1: einen Schnitt durch eine Stromwandleranordnung mit Überspannungsschutzanordnung mit einem Kondensator und einer Pegelfunkenstrecke, die
- Figur 2: eine perspektivische Ansicht eines Gehäuses der Stromwandleranordnung mit Kondensator, die
- Figur 3: einen Schnitt durch eine Stromwandleranordnung mit einer Überspannungsschutzanordnung mit einem Varistor und einer Pegelfunkenstrecke und die
- Figur 4: eine perspektivische Ansicht eines Gehäuses der Stromwandleranordnung mit Varistor.

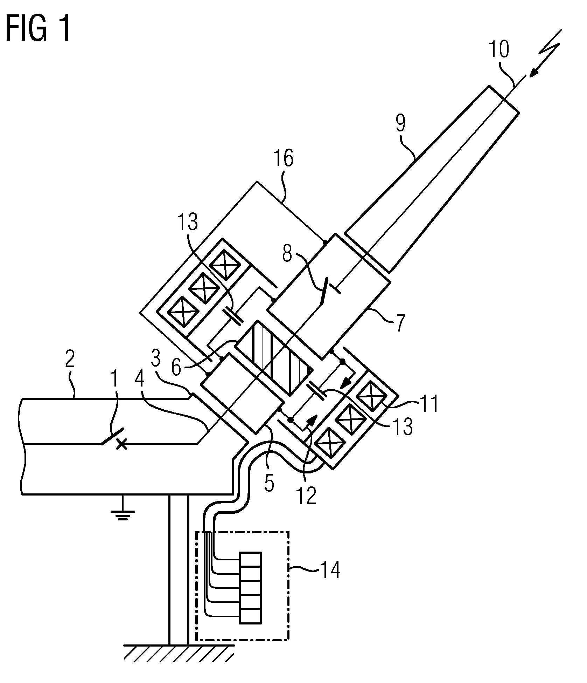

Die Figur 1 zeigt eine Schalteinrichtung im Schnitt, wobei einzelne Bauteile einer Kapselung nach Art einer Explosionszeichnung zur besseren Erkennbarkeit voneinander beabstandet sind.

Bei der in Figur 1 gezeigten Schalteinrichtung handelt es sich um eine druckgasisolierte Schalteinrichtung, d. h., Phasenleiter der Schalteinrichtung sind innerhalb einer Kapselung angeordnet, die fluiddicht ausgestaltet ist, wobei das Innere der Kapselung mit einem unter erhöhtem Druck stehenden elektrischen isolierenden Fluid, vorzugsweise einem Isoliergas, befüllt ist. Die Kapselung weist dabei verschiedene Abschnitte auf.

Die in Figur 1 gezeigte Anordnung weist einen Leistungsschalter 1 auf. Der Leistungsschalter 1 ist mit einer Unterbrechereinheit ausgestattet, welche relativ zueinander bewegbare Schaltkontaktstücke aufweist. Die Unterbrechereinheit des Leistungsschalters 1 ist im Innern eines Leistungsschalter-Kapselungsgehäuses 2 angeordnet. Das Leistungsschalter-Kapselungsgehäuse 2 ist vorliegend lediglich ausschnittsweise dargestellt. Das Leistungsschalter-Kapselungsgehäuse 2 weist einen ersten Anschlussstutzen 3 auf, welcher einer Einführung eines Phasenleiters 4 in das Innere des Leistungsschalter-Kapselungsgehäuses 2 dient. Der Phasenleiter 4 ist elektrisch isoliert gegenüber dem Leistungsschalter-Kapselungsgehäuse 2 angeordnet und von dem im Innern des Leistungsschalter-Kapselungsgehäuses 2 angeordneten elektrisch isolierenden Fluid, beispielsweise Schwefelhexafluoridgas, umspült.

An den ersten Anschlussstutzen 3 ist ein erstes Gehäuseteil 5 angeflanscht. Zwischen dem ersten Gehäuseteil 5 und dem ersten Anschlussstutzen 3 ist eine fluiddichte Verbindung geschaffen, so dass auch das erste Gehäuseteil 5 von dem elektrisch isolierenden Fluid durchspült sein kann. Das erste Gehäuseteil 5 ist über einen elektrisch isolierenden Spalt 6 mit einem zweiten Gehäuseteil 7 verbunden. Das erste Gehäuseteil 5 sowie das zweite Gehäuseteil 7 sind jeweils aus elektrisch leitendem Material gefertigt und sind jeweils fluiddicht mit dem zwischen den beiden Gehäuseteilen 5, 7 liegenden elektrisch isolierenden Spalt 6 verbunden. Für den Spalt 6 kann beispielsweise ein Isolierrohr aus Kunststoff oder Keramik eingesetzt werden. Erstes Gehäuseteil 5, elektrisch isolierender Spalt 6, zweites Gehäuseteil 7 sind Teil eines Gehäuses einer Stromwandleranordnung. Das erste Gehäuseteil 5, das zweite Gehäuseteil 7, der elektrisch isolierende Spalt 6 weisen jeweils eine im Wesentlichen rotationssymmetrische Struktur auf, wobei diese koaxial zu dem das erste Gehäuseteil 5, das zweite Gehäuseteil 7 und den elektrischen Spalt 6 durchsetzenden Phasenleiter 4 ausgerichtet sind.

In der Figur 1 ist beispielhaft gezeigt, dass innerhalb des zweiten Gehäuseteiles 7 auch noch weitere Bauteile, hier beispielsweise ein Trennschalter 8, angeordnet sein können. An der von dem elektrisch isolierenden Spalt 6 abgewandten Seite des zweiten Gehäuseteiles 7 ist beispielhaft eine Freiluftdurchführung 9 angeordnet. Mittels der Freiluftdurchführung 9 ist es möglich, den Phasenleiter 4 aus dem Inneren des zweiten Gehäuseteiles 7 zu einem Punkt außerhalb des zweiten Gehäuseteiles 7 zu führen und dort beispielsweise einen Anschlusspunkt 10 auszubilden, an welchem eine Freileitung anschließbar ist. Damit ist der Phasenleiter 4 in ein elektrisches Energieübertragungsnetzwerk einbindbar.

Es bleibt anzumerken, dass die in der Figur 1 sowie in den weiteren Figuren gezeigten Ausgestaltungen lediglich Beispiele der Verwendung einer erfindungsgemäßen Stromwandleranordnung darstellen. Hinsichtlich Form, Anordnung und Einbindung der Stromwandleranordnung können verschiedenartigste Varianten vorgesehen sein. So kann beispielsweise vorgesehen sein, dass die Stromwandleranordnung auch innerhalb eines Leiterzuges einer gasisolierten Schaltanlage befindlich ist, so dass sich an das zweite Gehäuseteil 7 weitere Gehäuse anschließen, die elektrisch leitende Eigenschaften aufweisen.

Der Bereich des elektrisch isolierenden Spaltes 6 ist von einem Sekundärteil 11 der Stromwandleranordnung umgeben. Vorliegend sind drei Kerne an dem Sekundärteil 11 vorgesehen, die jeweils Wicklungen tragen, in welchen in Abhängigkeit eines Stromflusses in dem Phasenleiter 4, der hier als Primärteil der Stromwandleranordnung dient, eine proportionale Spannung induziert wird. In der Figur 1 ist eine Stromwandleranordnung gezeigt, deren Primärteil 4 und Sekundärteil 11 unter Nutzung des transformatorischen Prinzips zusammenwirken. Der Sekundärteil 11 ist über entsprechende Anschlussleitungen mit einem Klemmkasten 14 verbunden, an dessen Kontaktierungspunkten zu einem Stromfluss in dem Phasenleiter 4 proportionale Größen abgegriffen und in der Folge weiterverarbeitet werden können. Dabei kann vorgesehen sein, dass innerhalb des Klemmkastens 14 auch eine Umsetzung, Verstärkung, etc. der von dem Sekundärteil 11 gelieferten physikalischen Größen vorgenommen wird.

Das Leistungsschalter-Kapselungsgehäuse 2 ist mit Erdpotential beaufschlagt. Über die Verflanschung des ersten Gehäuseteiles 5 an dem ersten Anschlussstutzen 3 des Leistungsschalter-Kapselungsgehäuses 2 ist dieses Potential auch auf das aus elektrisch leitfähigem Material gefertigte erste Gehäuseteil 5 übertragen. Aufgrund der elektrisch isolierenden Wirkung des elektrisch isolierenden Spaltes 6, welcher in sich geschlossen um den Phasenleiter 4 umläuft, ist eine Übertragung dieses Erdpotentiales über den elektrisch isolierenden Spalt 6 auf das zweite Gehäuseteil 7, welches ebenfalls aus elektrisch leitfähigem Material gefertigt ist, nicht möglich.

Zwischen dem ersten Gehäuseteil 5 und dem zweiten Gehäuseteil 7 ist eine niederohmige elektrisch leitende Verbindung 16 angeordnet. Die niederohmige Verbindung 16 überträgt das elektrische Potential des ersten Gehäuseteils 5 auf das zweite Gehäuseteil 7. Die niederohmige Verbindung 16 verläuft dabei außerhalb des Erfassungsbereiches des Sekundärteils 11. Somit ist weiterhin bezüglich einer Erfassung eines im Phasenleiter 4 fließenden elektrischen Stromes der Spalt 6 für den Sekundärteil 11 elektrisch isolierend wirksam. Im Erfassungsbereich des Sekundärteils 11 ist ein Stromfluss zwischen den Gehäuseteilen 5, 7 unterbunden.

Zum Schutz vor Überspannungen, wie sie beispielsweise aufgrund von Schalthandlungen, Störungen wie Blitzschläge o. ä. auftreten können, ist der elektrisch isolierende Spalt 6 von einer Überspannungsschutzanordnung überbrückt. In dem Ausführungsbeispiel nach Figur 1 weist die Überspannungsschutzanordnung zum einen eine Pegelfunkenstrecke 12 auf. Die Pegelfunkenstrecke 12 ist parallel zu mehreren Kondensatoren 13 angeordnet, welche ebenfalls den elektrisch isolierenden Spalt 6 überbrücken. Dabei ist die Lage von der Überspannungsschutzanordnung innerhalb des Erfassungsbereiches des Sekundärteiles 11 derart gewählt, dass diese von dem Sekundärteil 11 der Stromwandleranordnung in radialer Richtung überdeckt ist. Weiterhin wird durch den Einsatz einer derartig konzipierten Überspannungsschutzanordnung bezüglich des Phasenleiters 4 in axialer Richtung kein zusätzlicher Platz beansprucht. Vorliegend ist die Pegelfunkenstelle 12 dazu ausgelegt, um große Überspannungen, welche zwischen dem ersten Gehäuseteil 5 und dem zweiten Gehäuseteil 7 über dem elektrisch isolierenden Spalt 6 anstehen können, abzubauen. Mittels der Kondensatoren 13 ist zusätzlich ein frequenzabhängiges Impedanzelement gegeben, welches insbesondere bei hochfrequenten Überspannungen die elektrisch isolierende Wirkung des elektrisch isolierenden Spaltes 6 aufhebt und so einem Abbau einer über den elektrisch isolierenden Spalt 6 anstehenden hochfrequenten Überspannung dient. Es kann jedoch auch vorgesehen sein, dass von einer separaten Ausbildung einer Pegelfunkenstrecke 12 abgesehen wird und je nach den zu erwartenden Überspannungen die Überspannungsschutzanordnung lediglich ein oder mehrere frequenzabhängige Impedanzelemente aufweist.

Die Kondensatoren 13 wirken dabei derart, dass bei hochfrequenten Potentialdifferenzen zwischen dem ersten Gehäuseteil 5 und dem zweiten Gehäuseteil 7 einen niederimpedanten Ableitstrompfad über dem elektrisch isolierenden Spalt 6 gegen Erdpotential zum Abbau hochfrequenter Überspannungen durchgeschaltet wird. Mit einem Abbau der hochfrequenten Überspannung, d. h., nach einer Reduzierung der Potentialdifferenz zwischen dem ersten Gehäuseteil 5 und dem zweiten Gehäuseteil 7 erhöht sich die Impedanz der Kondensatoren 13 wieder, so dass der elektrisch isolierende Spalt 6 wieder wirksam ist.

Insbesondere während eines Durchschaltens der Überspannungsschutzanordnung und eines dadurch folgenden Kurzschließens des elektrisch isolierenden Spaltes 6 ist eine Wirksamkeit der Stromwandleranordnung nur in einem eingeschränkten Umfange zu erwarten.

Da jedoch davon ausgegangen werden kann, dass derartige Störwirkungen lediglich während eines kurzen Zeitraumes anstehen, kann dieser zeitweilige Ausfall toleriert werden.

In der Figur 1 sind die einzelnen Teile 5, 6, 7 des Gehäuses lediglich schematisch dargestellt. Weiterhin ist im Interesse einer deutlicheren Darstellbarkeit auf eine Darstellung der fluiddichten Verbindung an erstem Anschlussstutzen 3, erstem Gehäuseteil 5, elektrisch isolierendem Spalt 6, zweitem Gehäuseteil 7 sowie zweitem Gehäuseteil 7 und Freiluftdurchführung 9 verzichtet worden.

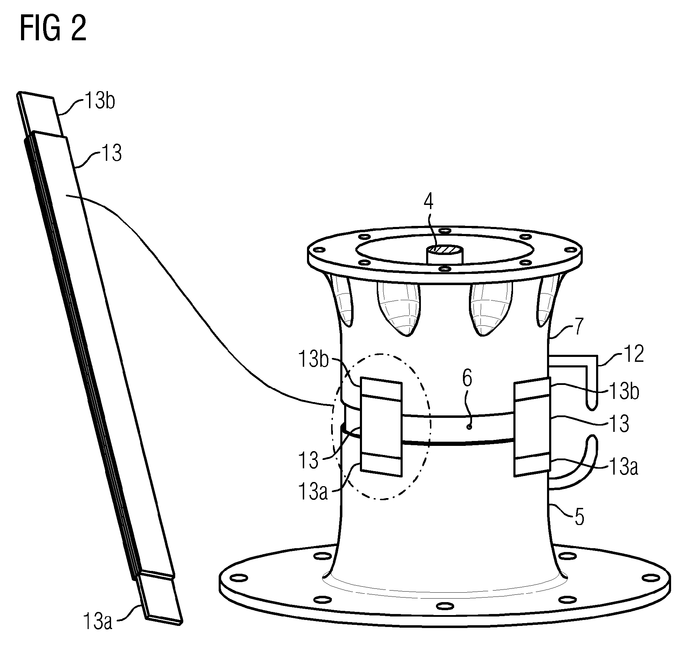

Beispielhaft soll anhand der Figur 2 eine konstruktive Ausgestaltung von erstem Gehäuseteil 5, elektrisch isolierendem Spalt 6, zweitem Gehäuseteil 7 sowie der vorgesehenen Überspannungsschutzanordnung beschrieben werden.

In der Figur 2 ist zu erkennen, dass das erste Gehäuseteil 5 sowie das zweite Gehäuseteil 7 jeweils stutzenartig ausgeführt sind, wobei die beiden Gehäuseteile 5, 7 über den elektrisch isolierenden Spalt 6 mechanisch miteinander verbunden und gehalten sind. Vorliegend sind sowohl das erste Gehäuseteil 5 als auch das zweite Gehäuseteil 7 rohrförmig ausgestaltet, wobei diese rohrförmigen Strukturen rotationssymmetrisch zueinander ausgerichtet sind. Die beiden Gehäuseteile 5, 7 sind dabei koaxial zu dem Phasenleiter 4 angeordnet. An den voneinander abgewandten Seiten der beiden Gehäuseteile 5, 7 sind die beiden Gehäuseteile 5, 7 jeweils mit Flanschen versehen. Über die Flansche ist ein fluiddichtes Verbinden der Gehäuseteile 5, 7 beispielsweise mit dem ersten Anschlussstutzen 3 oder beispielsweise mit einer Freiluftdurchführung 9 möglich. Durch eine Wahl der Dimension der an den Gehäuseteilen 5, 7 vorgesehenen Flansche ist auch ein Übergang von unterschiedlich dimensionierten Querschnitten an dem ersten Anschlussstutzen 3 und an der Freiluftdurchführung 9 ermöglicht. Es ist über die Gehäuseteile 5, 7 eine entsprechende Durchmesserreduzierung der Flansche vorgenommen.

An den einander zugewandten Enden der beiden Gehäuseteile 5, 7 ist der elektrisch isolierende Spalt 6 angeordnet. Der Spalt 6 ist beispielsweise durch ein elektrisch isolierendes Rohr, beispielsweise aus Kunststoff, Keramik o. ä., realisiert. Dabei kann eine Verbindung der beiden Gehäuseteile 5, 7 mit dem elektrisch isolierenden Spalt 6 in verschiedenartigster Art und Weise erfolgen. Beispielsweise kann das zur Ausbildung des elektrisch isolierenden Spaltes 6 vorgesehene Rohr mit den beiden Gehäuseteilen 5, 7 verklebt, vergossen, verschraubt, verflanscht oder in einer alternativen Gestalt verbunden sein. Zwischen dem elektrisch isolierenden Spalt 6 sowie den beiden Gehäuseteilen 5, 7 ist vorzugsweise eine fluiddichte Verbindung zu realisieren, so dass das Innere des Gehäuses um den Phasenleiter 4 herum mit einem unter erhöhtem Druck befindlichen elektrisch isolierenden Fluid befüllt werden kann.

Beispielhaft ist in der Figur 2 dargestellt, wie die Überspannungsschutzanordnung mit Kondensatoren 13 ausgestattet sein kann. Die Kondensatoren 13 sind dabei am äußeren Umfang des Gehäuses verteilt angeordnet, wobei die Kondensatoren 13 mit ihren Anschlusspunkten jeweils den elektrisch isolierenden Spalt 6 überbrücken und elektrisch leitend mit dem ersten bzw. dem zweiten Gehäuseteil 5, 7 verbunden sind. Vorzugsweise sind die Kondensatoren 13 nach Art des vergrößert dargestellten Plattenkondensators auszugestalten, d. h., zwischen den Anschlusspunkten 13a, 13b sind mehrere Lagen von Kondensatorplatten angeordnet, die über ein Dielektrikum voneinander getrennt sind. Dadurch sind flächige Kondensatoren 13 gebildet, welche an dem Gehäuse der Stromwandleranordnung auf äußere Mantelflächen des Gehäuses aufgesetzt werden können, ohne dabei den Umfang der Stromwandleranordnung wesentlich zu vergrößern. Die Elektroden der Pegelfunkenstrecke 12 sind jeweils mit einem der Gehäuseteile 5, 7 elektrisch leitend verbunden. Auf die Nutzung einer Pegelfunkenstrecke 12 kann jedoch auch verzichtet werden. Wie aus der Figur 1 bekannt, befindet sich die Überspannungsschutzanordnung auch bei abweichender Konstruktion innerhalb des Erfassungsbereiches des Sekundärteils 11.

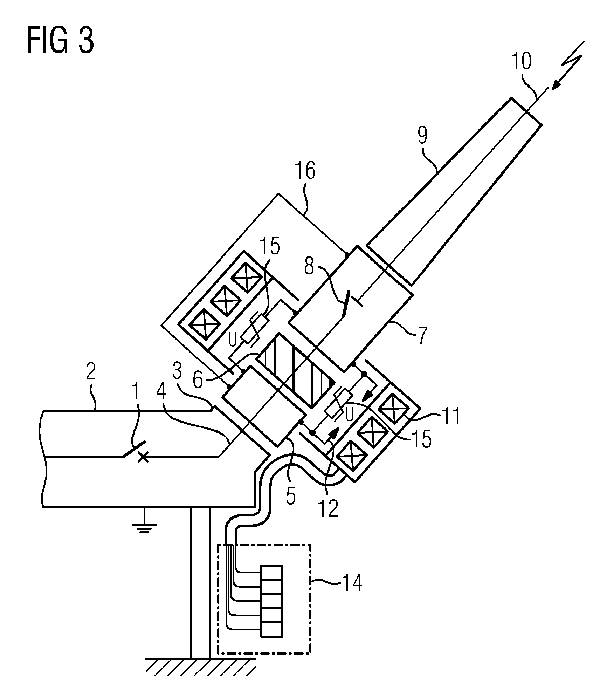

Die Figur 3 zeigt eine Abwandlung der aus der Figur 1 bekannten Schalteinrichtung. Entsprechend sind in der Figur 3 für die gleichwirkenden Baugruppen die gleichen Bezugszeichen verwandt. Für die Funktion der gleichwirkenden Baugruppen wird auf die Beschreibung der Figur 1 verwiesen. Im Folgenden wird lediglich auf Unterschiede hinsichtlich der Ausgestaltung der Überspannungsschutzanordnung der Stromwandleranordnung eingegangen.

Abweichend von der Figur 1 ist eine Verwendung von Varistoren 15 vorgesehen, welche den elektrisch isolierenden Spalt 6 überbrücken. Es ist zu den Varistoren 15 eine parallel geschaltete Pegelfunkstrecke 12 vorgesehen. Es kann jedoch auch auf die Nutzung einer derartigen Pegelfunkstrecke 12 verzichtet werden.

Im Falle einer Überspannung zwischen dem ersten Gehäuseteil 5 und dem zweiten Gehäuseteil 7 über dem elektrisch isolierenden Spalt 6 sind die Varistoren in der Lage, ihre Impedanz zu reduzieren. Bei einem Unterschreiten der Ansprechspannung steigt deren Impedanz an. Diese Impedanzänderung ist reversibel. Vorliegend ist die Nutzung mehrerer Varistoren 15 vorgesehen, welche am Umfang des Gehäuses der Stromwandleranordnung angeordnet sind. Neben einer Verwendung von Varistoren 15 in der Überspannungsschutzanordnung kann auch eine Kombination mit Kondensatoren vorgesehen sein. Darüber hinaus kann ergänzend auch eine Verwendung einer Pegelfunkenstrecke 12 vorgesehen sein. Eine Dimensionierung der Überspannungsschutzanordnung kann dabei je nach den zu erwartenden Überspannungen an dem elektrisch isolierenden Spalt 6 erfolgen.

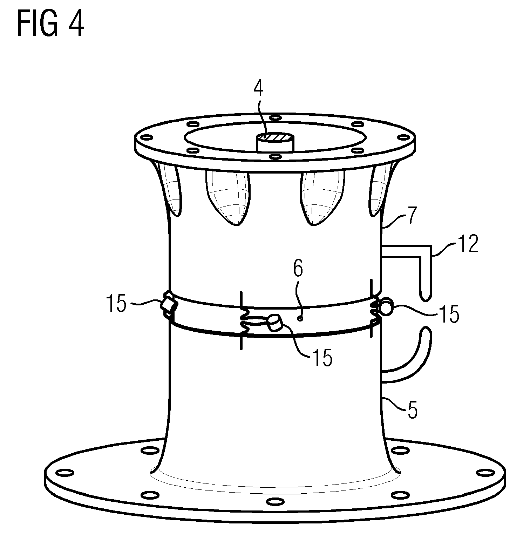

Die Figur 4 zeigt eine Möglichkeit einer Anordnung mehrerer Varistoren 15 am Umfang eines Gehäuses über dem elektrisch isolierenden Spalt 6. Am Umfang des Gehäuses gemäß Figur 4 sind mehrere Varistoren 15 angeordnet, die jeweils elektrisch parallel zueinander geschaltet sind und die beiden elektrisch leitfähigen Gehäuseteile 5, 7 miteinander verbinden und dabei eine Brücke über dem elektrisch isolierenden Spalt 6 ausbilden. Die Ausgestaltung der elektrisch leitfähigen Gehäuseteile 5, 7 sowie des elektrisch isolierenden Spaltes 6 ist der Figurenbeschreibung der Figur 2 entnehmbar. Im Falle einer Potentialdifferenz, die oberhalb der Ansprechschwelle der Varistoren 15 zwischen dem ersten Gehäuseteil 5 und dem zweiten Gehäuseteil 7 anliegt, kommt es zu einer Impedanzverringerung der Varistoren 15. Über die Varistoren 15 ist ein Ableitstrompfad zwischen den beiden Gehäuseteilen 5, 7 hergestellt und von dem zweiten Gehäuseteil 7 über die durchgeschalteten Varistoren 15 zu dem ersten Gehäuseteil 5 und im Folgenden über den ersten Anschlussstutzen 3 und das Leistungsschalter-Kapselungsgehäuse 2 ist eine Erdschlussstrombahn gebildet, welche einem Abbau der Überspannung mittels eines Erdschlussstromes dient.

## Patentansprüche

1. Stromwandleranordnung mit einem Primärteil (4), welcher von einem Gehäuse mit zumindest einem zwischen einem ersten und einem zweiten elektrisch leitfähigen Gehäuseteil angeordneten elektrisch isolierenden Spalt (6) umgeben ist und einen Sekundärteil (11) durchsetzt,
**dadurch gekennzeichnet, dass** der Spalt (6) von einer Überspannungsschutzanordnung überbrückt ist und
die Überspannungsschutzanordnung nach Art einer Brücke von dem einen Gehäuseteil zu dem anderen Gehäuseteil ausgebildet ist, wobei die Überspannungsschutzanordnung den Spalt elektrisch parallel überbrückt.

2. Stromwandleranordnung nach Anspruch 1,
**dadurch gekennzeichnet, dass** die Überspannungsschutzanordnung ein frequenzabhängiges Impedanzelement (13) aufweist.

3. Stromwandleranordnung nach Anspruch 2,
**dadurch gekennzeichnet, dass** das Impedanzelement einen Kondensator (13) aufweist.

4. Stromwandleranordnung nach Anspruch 3,
**dadurch gekennzeichnet, dass** der Kondensator (13) als Plattenkondensator ausgeführt ist.

5. Stromwandleranordnung nach Anspruch 4,
**dadurch gekennzeichnet, dass** mehrere Plattenkondensatoren (13) im Verlauf des Spaltes diesen überbrückend parallel angeordnet sind.

6. Stromwandleranordnung nach einem der Ansprüche 1 bis 5,
**dadurch gekennzeichnet, dass** die Überspannungsschutzanordnung ein spannungsabhängiges Impedanzelement (12, 15) aufweist.

7. Stromwandleranordnung nach einem der Ansprüche 1 bis 6, **dadurch gekennzeichnet, dass** das Impedanzelement eine Pegelfunkenstrecke (12) aufweist.

8. Stromwandleranordnung nach einem der Ansprüche 1 bis 7, **dadurch gekennzeichnet, dass** das Impedanzelement einen Varistor (15) aufweist.

9. Stromwandleranordnung nach einem der Ansprüche 1 bis 8, **dadurch gekennzeichnet, dass** der Spalt (6) sich in radialer Richtung zwischen Primärteil (4) und Sekundärteil (11) erstreckt.

## Claims

1. Current transformer arrangement comprising a primary part (4), which is surrounded by a housing with at least one electrically insulating gap (6) arranged between a first and a second electrically conductive housing part and passes through a secondary part (11),
**characterized in that**
the gap (6) is bridged by a surge protection arrangement and the surge protection arrangement is formed in the manner of a bridge from one housing part to the other housing part, wherein the surge protection arrangement bridges the gap in an electrically parallel manner.

2. Current transformer arrangement according to Claim 1,
**characterized in that**
the surge protection arrangement has a frequency-dependent impedance element (13).

3. Current transformer arrangement according to Claim 2,
**characterized in that**
the impedance element has a capacitor (13).

4. Current transformer arrangement according to Claim 3,
**characterized in that**
the capacitor (13) is in the form of a plate capacitor.

5. Current transformer arrangement according to Claim 4,
**characterized in that**
a plurality of plate capacitors (13) are arranged in parallel in the profile of the gap so as to bridge said gap.

6. Current transformer arrangement according to one of Claims 1 to 5,
**characterized in that**
the surge protection arrangement has a voltage-dependent impedance element (12, 15).

7. Current transformer arrangement according to one of Claims 1 to 6,
**characterized in that**
the impedance element has a coordinating spark gap (12).

8. Current transformer arrangement according to one of Claims 1 to 7,
**characterized in that**
the impedance element has a varistor (15).

9. Current transformer arrangement according to one of Claims 1 to 8,
**characterized in that**
the gap (6) extends in the radial direction between the primary part (4) and the secondary part (11).

## Revendications

1. Agencement transformateur de courant, comprenant une partie (4) primaire, qui traverse une partie (11) secondaire et qui est entourée d'une enveloppe ayant au moins un intervalle (6) isolant électriquement et disposé entre une première et une deuxième parties d'enveloppe conductrices de l'électricité,
**caractérisé en ce que**
l'intervalle (6) est court-circuité par un agencement de protection vis-à-vis d'une surtension et
l'agencement de protection vis-à-vis d'une surtension est constitué à la manière d'un pont allant d'une partie de l'enveloppe à l'autre partie de l'enveloppe, l'agencement de protection vis-à-vis d'une surtension court-circuitant en parallèle électriquement l'intervalle.

2. Agencement transformateur de courant suivant la revendication 1,
**caractérisé en ce que**
l'agencement de protection vis-à-vis d'une surtension a un élément (13) d'impédance qui dépend de la fréquence.

3. Agencement transformateur de courant suivant la revendication 2,
**caractérisé en ce que**
l'élément d'impédance a un condensateur (13).

4. Agencement transformateur de courant suivant la revendication 3,
**caractérisé en ce que**
le condensateur (13) est réalisé sous la forme d'un condensateur à plateaux.

5. Agencement transformateur de courant suivant la revendication 4,
**caractérisé en ce que**
plusieurs condensateurs (13) à plateaux sont montés en parallèle dans l'intervalle en le court-circuitant.

6. Agencement transformateur de courant suivant l'une des revendications 1 à 5,
**caractérisé en ce que**
l'agencement de protection vis-à-vis d'une surtension a un élément (12, 15) d'impédance, qui dépend de la tension.

7. Agencement transformateur de courant suivant l'une des revendications 1 à 6,
**caractérisé en ce que**
l'élément d'impédance a un éclateur (12) à niveau.

8. Agencement transformateur de courant suivant l'une des revendications 1 à 7,
**caractérisé en ce que**
l'élément d'impédance a une varistance (15).

9. Agencement transformateur de courant suivant l'une des revendications 1 à 8,
**caractérisé en ce que**
l'intervalle (6) s'étend dans la direction radiale entre la partie (4) primaire et la partie (11) secondaire.
